# EUROPÄISCHE PATENTSCHRIFT

(11) **EP 2 981 950 B1**
(45) Veröffentlichungstag und Bekanntmachung des Hinweises auf die Patenterteilung: **01.03.2017**
(21) Anmeldenummer: 14716267.1
(22) Anmeldetag: 03.04.2014
(51) Int. Cl.: G08C 17/02

(54) **ELEKTRISCHES STEUERGERÄT UND RFID-SCHREIB-/LESEGERÄT**
ELECTRICAL CONTROL UNIT AND RFID READ/WRITE DEVICE
APPAREIL DE COMMANDE ÉLECTRIQUE ET DISPOSITIF DE LECTURE/ÉCRITURE RFID

(30) Priorität: 03.04.2013 DE 102013205896
(43) Veröffentlichungstag der Anmeldung: 10.02.2016
(73) Patentinhaber: Lenze Drives GmbH, 32699 Extertal (DE)
(72) Erfinder: WENDT, Hans, 31787 Hameln (DE); RAYMANN, Kurt, CH-9525 Lenggenwil (CH)
(74) Vertreter: Patentanwälte Ruff, Wilhelm, Beier, Dauster & Partner mbB
(86) Internationale Anmeldenummer: PCT/EP2014/056669
(87) Internationale Veröffentlichungsnummer: WO 2014/161924

(56) Entgegenhaltungen:
- DE-A1-102007 036 835
- US-A1- 2005 037 707
- US-A1- 2008 041 930

## Beschreibung

Die Erfindung betrifft einen Frequenz- oder Servoumrichter.

Elektrische Steuergeräte, beispielsweise in Form von Frequenz- oder Servoumrichtern, müssen in der Regel bei ihrer Inbetriebnahme parametriert werden, d.h. Betriebsparametern müssen applikationsspezifische Betriebsparameterwerte zugewiesen werden und/oder Programmcode muss in das Steuergerät geladen werden. Betriebsparameter können beispielsweise eine Netzwerkadresse, eine maximal abgebbare Leistung, ein Schaltverhalten, Regelungsparameter usw. sein.

Die US 2005/0037707 A1 zeigt ein Gerät zur drahtlosen Kommunikation mit einem passiven RFID-Tag mit einem Speicher zum Empfangen und Speichern von Konfigurationsdaten. Der Speicher ist mittels eines RFID-Schreib-/Lesegeräts beschreibbar.

Die US 2008/0041930 A1 zeigt ein RFID-Tag mit einem beschreibbaren nichtflüchtigen Speicher zum Speichern von Konfigurationsparametern für ein Gerät, welches mit dem RFID-Tag verbunden ist, wobei das Speichern selbst dann möglich ist, wenn das Gerät nicht mit Energie versorgt ist.

Die DE 10 2007 036 835 A1 zeigt ein Elektrogerät mit Betriebsdatenauslesung im stromlosen Zustand.

Der Erfindung liegt die Aufgabe zugrunde, einen Frequenz- oder Servoumrichter zur Verfügung zu stellen, der eine einfache und zuverlässige Einstellung von Betriebsparameterwerten und/oder das Laden von Programmcode ermöglichen, insbesondere ohne dass ein Öffnen des Frequenz- oder Servoumrichters notwendig ist, und die insbesondere eine Einstellung selbst dann ermöglichen, wenn der Frequenz- oder Servoumrichter nicht mit Betriebsenergie versorgt ist und/oder ein Metallgehäuse aufweist.

Die Erfindung löst diese Aufgabe durch einen Frequenz- oder Servoumrichter nach Anspruch 1.

Der Frequenz- oder Servoumrichter ist im Normalbetrieb mit einer Betriebsspannung, beispielsweise Netzspannung, versorgt.

Der Frequenz- oder Servoumrichter weist einen nicht-flüchtigen Speicher und/oder Programmspeicher, beispielsweise ein EEPROM bzw. einen Flash-Speicher, zum Speichern von Betriebsparameterwerten und/oder Programmcode des Frequenz- oder Servoumrichters auf. Weiter ist eine Steuereinrichtung, beispielsweise in Form eines Mikroprozessors, vorgesehen, die mit dem Speicher gekoppelt ist und die einen Betrieb des Frequenz- oder Servoumrichters in Abhängigkeit von den gespeicherten Betriebsparameterwerten und/oder dem gespeicherten Programmcode steuert, so lange der Frequenz- oder Servoumrichter bzw. dessen Steuereinrichtung mit der Betriebsspannung versorgt ist.

Der Frequenz- oder Servoumrichter umfasst weiter einen passiven radio-frequency identification (RFID)-Transponder, der ebenfalls mit dem Speicher gekoppelt ist und der dazu ausgebildet ist, unabhängig davon, ob der Frequenz- oder Servoumrichter mit der Betriebsspannung versorgt ist oder nicht, von einem RFID-Schreib-/Lesegerät übertragene Betriebsparameterwerte und/oder von dem RFID-Schreib-/Lesegerät übertragenen Programmcode in dem Speicher zu speichern und/oder in dem Speicher gespeicherte Betriebsparameterwerte bzw. in dem Speicher gespeicherten Programmcode an das RFID-Schreib-/Lesegerät zu übertragen. Insbesondere ist der passive radio-frequency identification (RFID)-Transponder dazu ausgebildet, die von dem RFID-Schreib-/Lesegerät übertragenen Betriebsparameterwerte und/oder den von dem RFID-Schreib-/Lesegerät übertragenen Programmcode in dem Speicher zu speichern und/oder in dem Speicher gespeicherte Betriebsparameterwerte bzw. in dem Speicher gespeicherten Programmcode an das RFID-Schreib-/Lesegerät zu übertragen, wenn der Frequenz- oder Servoumrichter nicht mit der Betriebsspannung versorgt ist.

Ein passiver RFID-Transponder ist dazu in der Lage, seine Betriebsenergie alleine aus dem von dem RFID-Schreib-/Lesegerät erzeugten Feld zu erzeugen. Es versteht sich, dass der RFID-Transponder zusätzlich auch aus der Betriebsspannung des Frequenz- oder Servoumrichters versorgt sein kann.

Der nicht-flüchtige Speicher ist derart ausgestaltet, dass ein Zugriff sowohl von der Steuereinrichtung als auch von dem RFID-Transponder möglich ist. Der nicht-flüchtige Speicher kann beispielsweise ein so genannter Dual-Port-Speicher sein. Im Übrigen sei diesbezüglich auch auf die einschlägige Fachliteratur verwiesen.

Der RFID-Transponder und das RFID-Schreib-/Lesegerät können beispielsweise über die so genannte "Near Field Communication" (Nahfeldkommunikation, NFC) miteinander kommunizieren. Insoweit sei auch auf die einschlägige Fachliteratur verwiesen.

Der Frequenz- oder Servoumrichter weist weiter ein Gehäuse auf, in dem der Speicher, die Steuereinrichtung und der RFID-Transponder angeordnet sind.

Das Gehäuse kann ein Gehäuseteil aus Kunststoff aufweisen. Neben dem Gehäuseteil aus Kunststoff kann ein weiteres Gehäuseteil aus Metall vorgesehen sein, wobei die beiden Gehäuseteile in Verbindung ein geschlossenes Gehäuse bilden. Es versteht sich, dass weitere Gehäuseteile vorhanden sein können.

Auf einer einem Benutzer zuzuwendenden Seite des Gehäuseteils aus Kunststoff, d.h. auf einer Gehäuseaußenseite, ist ein Symbol als Positionierhilfe für eine Schreib-/Leseantenne des RFID-Schreib-/Lesegeräts vorgesehen, das einem Benutzer symbolisiert, an welcher Position er die Schreib-/Leseantenne zu positionieren hat. Das Symbol kann beispielsweise eine Antenne symbolisieren.

Dem Transponder ist eine herkömmliche Transponderantenne zugeordnet bzw. der Transponder ist mit der Transponderantenne elektrisch verbunden, wobei die Transponderantenne innerhalb des Gehäuses möglichst unmittelbar unterhalb des Symbols angeordnet ist, so dass eine wirksame Kopplung zwischen der Schreib-/Leseantenne des RFID-Schreib-/Lesegeräts und der Transponderantenne gegeben ist.

Das Gehäuse kann zusätzlich eine Öffnung (Parametrieröffnung) aufweisen, in die die Schreib-/Leseantenne des RFID-Schreib-/Lesegeräts derart einführbar ist, dass eine Datenübertragung zwischen dem RFID-Schreib-/Lesegerät und dem RFID-Transponder möglich ist. Die Parametrieröffnung ist dazu vorgesehen, dass die Schreib-/Leseantenne des RFID-Schreib-/Lesegeräts in die Parametrieröffnung eingeführt wird.

Der RFID-Transponder wird über die vom RFID-Schreib-/Lesegerät erzeugten Felder mit Energie versorgt, so dass die Daten bzw. Betriebsparameterwerte übertragen und in den Speicher eingelesen werden können, ohne dass der Frequenz- oder Servoumrichter geöffnet werden oder mit einem Versorgungsspannungsnetz zur Bereitstellung der Betriebsspannung verbunden werden muss.

Das Gehäuse kann ein Teil-Metallgehäuse oder Voll-Metallgehäuse sein, so dass eine wirksame Abschirmung gegen Störemission und Störimmission gegeben ist, wobei aufgrund der Parametrieröffnung dennoch eine Datenkommunikation zwischen RFID-Schreib-/Lesegerät und RFID-Transponder möglich ist.

Der Frequenz- oder Servoumrichter kann eine Abdeckkappe aufweisen, die dazu ausgebildet ist, die Parametrieröffnung zu verschließen. Die Abdeckkappe kann wiederverschließbar ausgebildet sein, beispielsweise schraubbar, so dass ein mehrmaliges Verschließen und Öffnen möglich ist.

Die Abdeckkappe kann aus einem Material bestehen, welches für Magnetfelder, elektrische Felder und/oder elektromagnetische Felder im Wesentlichen durchlässig ist. Insbesondere ist die Abdeckkappe eine Kunststoffabdeckkappe.

Die Abdeckkappe kann dazu ausgebildet sein, die Parametrieröffnung fluiddicht zu verschließen.

Die Abdeckkappe kann eine sackförmige Vertiefung aufweisen, in die die Schreib-/Leseantenne des RFID-Schreib-/Lesegeräts einführbar ist, so dass die Parametrieröffnung beispielsweise fluiddicht verschlossen ist und gleichzeitig eine Datenkommunikation zwischen RFID-Schreib-/Lesegerät und RFID-Transponder möglich ist.

Die Schreib-/Leseantenne des RFID-Schreib-/Lesegeräts kann in die Parametrieröffnung des Gehäuses und/oder in die sackförmige Vertiefung bis in eine, beispielsweise mechanisch vorgegebene, Endstellung einführbar sein.

Die Endstellung kann derart konstruktiv vorgegeben sein, dass ein Abstand zwischen der Schreib-/Leseantenne des RFID-Schreib-/Lesegeräts und einer Transponderantenne einem Norm-Abstand entspricht bzw. innerhalb eines Norm-Abstandsbereichs liegt, der in einer korrespondierenden RFID-Transponder-Norm festgelegt ist, so dass eine Energieübertragung und Datenübertragung von dem RFID-Schreib-/Lesegerät zu dem RFID-Transponder gemäß Norm/Standard möglich ist.

Die Endstellung kann mittels Formgebung der Parametrieröffnung und/oder Formgebung der Abdeckkappe vorgegeben sein.

Die Parametrieröffnung des Gehäuses kann eine konische Parametrieröffnung sein, wobei ein Durchmesser der konischen Parametrieröffnung in Richtung des Gehäuseinneren abnimmt.

Die konische Parametrieröffnung kann eine zylindrisch-konische Parametrieröffnung sein.

Das RFID-Schreib-/Lesegerät weist eine Schreib-/Leseantenne auf, die derart mechanisch dimensioniert ist, dass sie in die Parametrieröffnung des oben genannten Frequenz- oder Servoumrichters, insbesondere bis in eine Endstellung, einführbar ist.

Die Endstellung kann mittels Formgebung der Schreib-/Leseantenne und/oder mittels einer sich an die Schreib-/Leseantenne anschließenden Schulter des RFID-Schreib-/Lesegeräts vorgegeben sein.

Die Erfindung wird nachfolgend unter Bezugnahme auf die Zeichnungen detailliert beschrieben. Hierbei zeigt schematisch:
- Fig. 1: ein elektrisches Steuergerät in Form eines Frequenzumrichters, das mittels eines RFID-Schreib-/Lesegeräts parametrierbar ist,
- Fig. 2: einen Ausschnitt des in Fig. 1 gezeigten Frequenzumrichters, wobei das RFID-Schreib-/Lesegerät bis in eine Endstellung in eine Parametrieröffnung des Frequenzumrichters eingeführt ist,
- Fig. 3: eine Abdeckkappe mit einer sackförmigen Vertiefung zum Einsetzen oder Einschrauben in die in den Figuren 1 und 2 gezeigte Parametrieröffnung und
- Fig. 4: ein elektrisches Steuergerät in Form eines Frequenzumrichters, das mittels eines RFID-Schreib-/Lesegeräts parametrierbar ist, gemäß einer weiteren Ausführungsform.

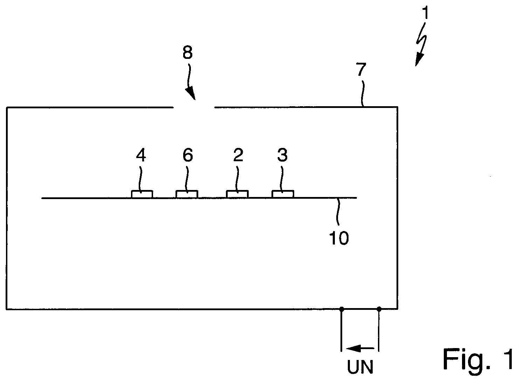

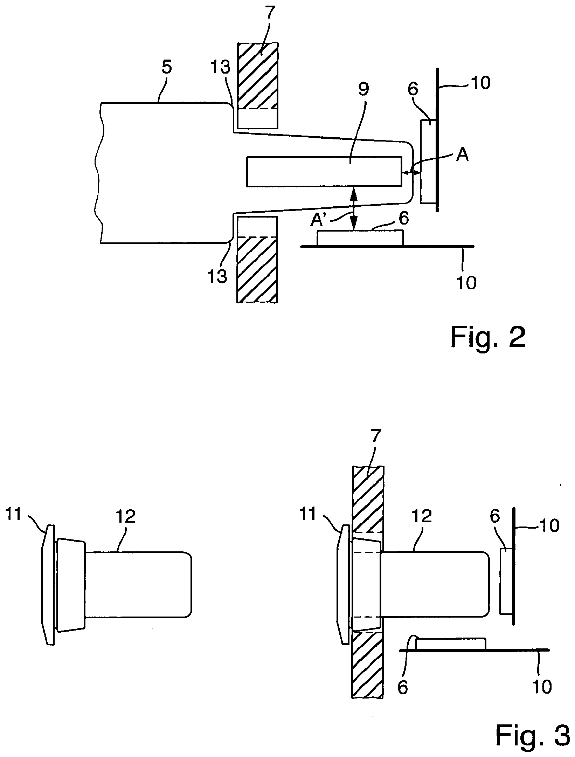

Fig. 1 zeigt ein elektrisches Steuergerät in Form eines Frequenzumrichters 1, das bzw. der mittels eines tragbaren RFID-Schreib-/Lesegeräts 5 (siehe Fig. 2) parametrierbar ist.

Der Frequenzumrichter 1 wird im herkömmlichen Betriebsfall mit einer Betriebs- bzw. Netzwechselspannung UN versorgt.

Der Frequenzumrichter 1 weist einen nicht-flüchtigen Speicher in Form eines EEPROMs 2 zum Speichern von Betriebsparameterwerten und/oder Programmcode auf, der auf einer Leiterplatte 10 angeordnet ist.

Weiter ist eine Steuereinrichtung in Form eines Mikroprozessors 3 vorgesehen, der auf der Leiterplatte 10 angeordnet und mit dem EEPROM 2 funktional gekoppelt ist. Der Mikroprozessor 3 steuert den Betrieb des Frequenzumrichters 1 in Abhängigkeit von den gespeicherten Betriebsparameterwerten und/oder dem gespeicherten Programmcode, so lange der Frequenzumrichter 1 mit der Betriebsspannung UN versorgt ist. Aus der Betriebsspannung UN kann eine geeignete Kleinspannung zur Versorgung des Mikroprozessors 3 erzeugt werden.

Der Frequenzumrichter 1 weist weiter einen herkömmlichen passiven radio-frequency identification (RFID)-Transponder 4 und eine zugehörige Transponderantenne 6 auf, wobei der RFID-Transponder 4 und die Transponderantenne 6 auf der Leiterplatte 10 angeordnet sind und der RFID-Transponder 4 mit dem EEPROM 2 funktional gekoppelt ist.

Der RFID-Transponder 4 ist dazu vorgesehen, unabhängig davon, ob der Frequenzumrichter 1 mit der Betriebsspannung UN versorgt ist oder nicht, von dem RFID-Schreib-/Lesegerät 5 übertragene Betriebsparameterwerte und/oder von dem RFID-Schreib-/Lesegerät 5 übertragenen Programmcode in das EEPROM 2 zu speichern und/oder in dem EEPROM 2 gespeicherte Betriebsparameterwerte und/oder gespeicherten Programmcode an das RFID-Schreib-/Lesegerät 5 zu übertragen.

Sämtliche oben genannten Komponenten sind in ein Metallgehäuse 7 integriert, wobei das Gehäuse eine Parametrieröffnung 8 aufweist, die derart ausgebildet und dazu vorgesehen ist, dass eine Schreib-/Leseantenne 9 (siehe Fig. 2) des RFID-Schreib-/Lesegeräts 5 in die Parametrieröffnung 8 einführbar ist.

Die Parametrieröffnung 8 kann als Bohrung im Metallgehäuse 7 vorgesehen sein, wobei zusätzlich ein Innengewinde an der Parametrieröffnung 8 vorgesehen sein kann.

Fig. 2 zeigt einen Ausschnitt des in Fig. 1 gezeigten Frequenzumrichters 1, wobei das RFID-Schreib-/Lesegerät 5 bzw. dessen Schreib-/Leseantenne 9 bis in eine mechanisch festgelegte Endstellung/Endlage in die Parametrieröffnung 8 eingeführt ist. Die Leiterplatte 10 ist in zwei alternativen Positionen dargestellt.

Die Schreib-/Leseantenne 9 ist mit einem Kunststoffgehäuse ummantelt, um die Schreib-/Leseantenne 9 von der Umgebung elektrisch zu isolieren.

In beiden gezeigten alternativen Position der Leiterplatte 10 ist die Endstellung derart konstruktiv mechanisch vorgegeben, dass ein Abstand A bzw. A' zwischen der Schreib-/Leseantenne 9 des RFID-Schreib-/Lesegeräts 5 und der Transponderantenne 6 innerhalb eines Norm-Abstandsbereichs liegt, der in einer korrespondierenden RFID-Transponder-Norm festgelegt ist.

Die Schreib-/Leseantenne 9 bzw. deren Ummantelung weist einen Durchmesser auf, der kleiner ist als ein Durchmesser der Parametrieröffnung 8. Eine Schulter 13 des RFID-Schreib-/Lesegeräts 5 weist einen Durchmesser auf, der größer ist als der Durchmesser der Parametrieröffnung 8, so dass die Endstellung durch die Lage der Schulter 13 mechanisch festgelegt ist.

Die Endstellung kann auch dadurch mechanisch festgelegt sein, dass eine formschlüssige Verbindung zwischen einer Berandung der Parametrieröffnung 8 und der Schreib-/Leseantenne 9 des RFID-Schreib-/Lesegeräts 5 hergestellt ist.

Die Parametrieröffnung 8 kann (zylindrisch-) konisch ausgeführt sein, wobei ein Durchmesser der konischen Parametrieröffnung 8 in Richtung des Gehäuseinneren abnimmt.

Für den Parametriervorgang wird die Schreib-/Leseantenne 9 in die Parametrieröffnung 8 eingeführt bzw. gesteckt. Mittels der beispielsweise konischen Formgebung positioniert sich die Schreib-/Leseantenne 9 in einer definierten Position/Endstellung gegenüber der Transponderantenne 6. Die Formgebung verhindert gleichzeitig ein zu tiefes Eindringen der Schreib-/Leseantenne 9, so dass Beschädigungen innerhalb des zu parametrierenden Frequenz- oder Servoumrichters 1 ausgeschlossen werden können.

Die Schreib-/Leseantenne 9 kann, beispielsweise durch die Ummantelung, elektrisch isoliert aufgebaut sein, so dass ein Schutz des Bedieners auch bei einem eingeschaltetem Frequenzumrichter 1 gewährleistet ist.

Fig. 3 zeigt eine beispielsweise schraubbare Kunststoffabdeckkappe 11 mit einer sackförmigen Vertiefung 12 zum Einsetzen bzw. Einschrauben in die in den Figuren 1 und 2 gezeigte Parametrieröffnung 8.

Die Schreib-/Leseantenne 9 des RFID-Schreib-/Lesegeräts 5 ist in die sackförmigen Vertiefung 12 derart einführbar, dass eine Datenübertragung zwischen dem RFID-Schreib-/Lesegerät 5 und dem RFID-Transponder 4 möglich ist. Auf diese Weise ist die Parametrieröffnung 8 fluiddicht verschließbar, wobei die Abdeckkappe 11 zur Parametrierung nicht abgenommen werden muss.

Die Kunststoffabdeckkappe 11 ist derart geformt und angeordnet, dass sie genau über bzw. neben der Transponderantenne 6 endet.

Die Schreib-/Leseantenne 9 des RFID-Schreib-/Lesegeräts 5 ist durch ihre Formgebung (beispielsweise konische Verjüngung, Länge, Durchmesser, usw.) derart an die konstruktiven Merkmale des zu parametrierenden Frequenz- oder Servoumrichters 1 angepasst, dass die Energie- und Datenübertragung zu dem zu parametrierende Frequenz- oder Servoumrichter 1 auch dann gewährleistet ist, wenn der Frequenz- oder Servoumrichter 1 ein Metallgehäuse aufweist, wie dies beispielsweise im Fall von dezentralen Frequenzumrichtern (z.B. Motorumrichtern) häufig gegeben ist.

Der zu parametrierende Frequenz- oder Servoumrichter 1 weist hierzu eine Parametrieröffnung 8 auf, beispielsweise in Form einer Bohrung, die gegebenenfalls noch mit einem Gewinde versehen sein kann, um eine schraubbare Abdeckkappe anzubringen.

Die Parametrieröffnung 8 befindet sich an einer Position, an der sich die Antenne 6 des Transponders 4 auf der Leiterplatte 10 befindet.

Diese Parametrieröffnung kann im Betrieb durch eine handelsübliche Abdeckkappe für Kabeleinführungen verschlossen sein, die zum Vorgang der Parametrierung geöffnet werden muss.

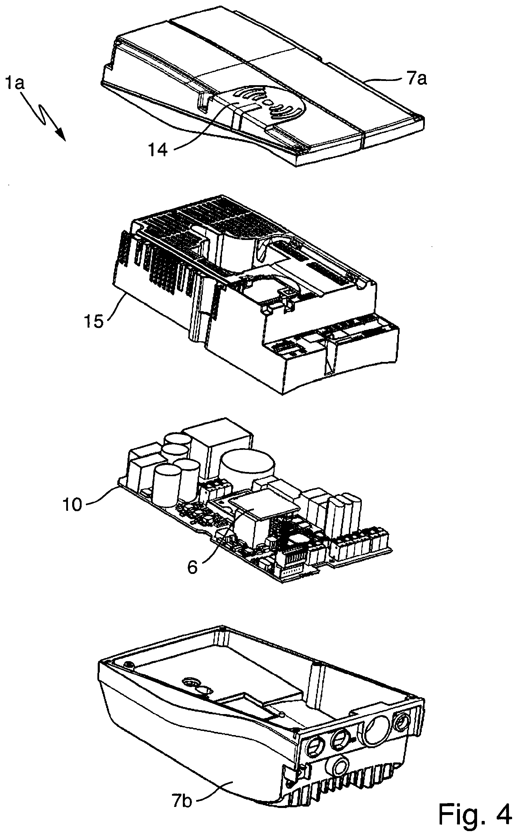

Fig. 4 zeigt in Explosionsdarstellung ein elektrisches Steuergerät in Form eines Frequenzumrichters 1a, der mittels des RFID-Schreib-/Lesegeräts 5 parametrierbar ist, gemäß einer weiteren Ausführungsform. Bis auf das Fehlen der Parametrieröffnung und die Gestaltung des Gehäuses entspricht diese Ausführungsform den oben beschriebenen Ausführungsformen, so dass auch auf die obige Beschreibung verweisen sei, um Wiederholungen zu vermeiden.

Bei der gezeigten Ausführungsform 1 a ist das Gehäuse zweiteilig ausgeführt und weist keine Parametrieröffnung auf. Das Gehäuse weist ein Gehäuseoberteil 7a aus Kunststoff und ein Gehäuseunterteil 7b aus Metall, beispielsweise Aluminiumdruckguss, auf, wobei die beiden Gehäuseteile 7a und 7b in Verbindung ein geschlossenes Gehäuse bilden.

Die Leiterplatte 10 ist in einem Kunststoffformteil 15 gehalten, wobei der Verbund aus Kunststoffformteil 15 und darin eingesetzter Leiterplatte 10 in das Gehäuseunterteil 7b eingesetzt und mit diesem mittels einer Schraubverbindung verbunden ist. Das Gehäuseoberteil 7a dient als Deckel und verschließt die Anordnung fluiddicht.

Auf einer einem Benutzer zuzuwendenden Seite des Gehäuseoberteils 7a ist ein Symbol bzw. eine Positionsmarkierung 14 als Positionierhilfe für die Schreib-/Leseantenne 9 des RFID-Schreib-/Lesegeräts 5 vorgesehen, das einem Benutzer symbolisiert, an welcher Position die Schreib-/Leseantenne 9 anzulegen ist. Die Schreib-/Leseantenne 9 kann für diesen Fall flächig ausgeführt sein.

Die flächige Transponderantenne 6 ist innerhalb des durch die Gehäuseteile 7a und 7b gebildeten Gehäuses unmittelbar unterhalb des Symbols 14 in dem Kunststoffformteil 15 gehalten und elektrisch mit der Leiterplatte 10 kontaktiert, so dass eine wirksame Kopplung zwischen der Schreib-/Leseantenne 9 des RFID-Schreib-/Lesegeräts 5 und der Transponderantenne 5 gegeben ist, wenn die Schreib-/Leseantenne 9 korrekt positioniert ist.

Erfindungsgemäß erfolgt die Übertragung der Parameterwerte unter Anwendung der RFID-Technologie. Im zu parametrierenden Frequenz- oder Servoumrichter 1 ist hierzu ein RFID-Transponder 4 vorgesehen. Der RFID-Transponder 4 umfasst herkömmlich eine Transponderantenne 6, einen Schaltkreis zum Senden und Empfangen von Daten sowie einen nicht-flüchtigen Speicher 2. Dieser Speicher 2 ist gleichzeitig in den Schaltkreis der Mikroprozessorsteuerung 3 des zu parametrierenden Gerätes 1 funktional integriert.

Die Parametrierung bzw. Datenübertragung erfolgt mittels des tragbaren RFID-Schreib-/Lesegeräts 5 durch hochfrequente Radiowellen, und/oder induktive bzw. magnetische Kopplung, usw. Der RFID-Transponder 4 wird über die vom RFID-Schreib-/Lesegerät 5 erzeugten Radiowellen bzw. magnetischen Wechselfelder mit Energie versorgt, so dass die Daten bzw. Betriebsparameterwerte und/oder Programmcode übertragen und in den Speicher 2 eingelesen werden können, ohne dass der Frequenz- oder Servoumrichter 1 vom Bediener geöffnet werden oder mit einem Versorgungsspannungsnetz verbunden werden muss.

Die ordnungsgemäße Übertragung der Daten kann quittiert werden, indem dem Bediener beispielsweise mittels des RFID-Schreib-/Lesegeräts 5 angezeigt wird, dass der Parametriervorgang bzw. Programmiervorgang abgeschlossen ist, so dass der Bediener das RFID-Schreib-/Lesegerät 5 entfernen kann. Dadurch endet die Energiezufuhr des Transponders 4, so dass sich dieser abschaltet.

Im Betrieb erfolgt die Energieversorgung des Betriebsparameterspeichers 2 durch eine Kleinspannungsversorgung des Frequenz- oder Servoumrichters 1 und die Steuereinrichtung 3 des Frequenz- oder Servoumrichters 1 kann auf die gespeicherten Parameterwerte zugreifen.

Die Erfindung ermöglicht die drahtlose Parametrierung von Frequenz- oder Servoumrichtern, selbst wenn diese (teilweise) ein Metallgehäuse aufweisen, ohne dass der zu parametrierende Frequenz- oder Servoumrichter geöffnet und/oder mit der Betriebsspannung zu versorgen ist.

Dies ist besonders vorteilhaft in Kontext der Inbetriebnahme und/oder bei der Entwicklung neuer Antriebstypen.

## Patentansprüche

1. Frequenz- oder Servoumrichter (1, 1a), der im Betrieb mit einer Betriebsspannung (UN) versorgt ist, aufweisend:
- einen nicht-flüchtigen Speicher (2) zum Speichern von Betriebsparameterwerten und/oder von Programmcode des Frequenz- oder Servoumrichters (1),
- eine Steuereinrichtung (3), die mit dem Speicher (2) gekoppelt ist und die einen Betrieb des Frequenz- oder Servoumrichters (1) in Abhängigkeit von den gespeicherten Betriebsparameterwerten und/oder von dem gespeicherten Programmcode steuert, so lange der Frequenz- oder Servoumrichter (1) mit der Betriebsspannung versorgt ist,
- einen passiven radio-frequency identification (RFID)-Transponder (4), der mit dem Speicher (2) gekoppelt ist und der dazu ausgebildet ist, unabhängig davon, ob der Frequenz- oder Servoumrichter (1) mit der Betriebsspannung (UN) versorgt ist, von einem RFID-Schreib-/Lesegerät (5) übertragene Betriebsparameterwerte und/oder von dem RFID-Schreib-/Lesegerät (5) übertragenen Programcode in den Speicher (2) zu speichern und/oder in dem Speicher (2) gespeicherte Betriebsparameterwerte und/oder in dem Speicher (2) gespeicherten Programmcode an das RFID-Schreib-/Lesegerät (5) zu übertragen, und
- ein Gehäuse (7; 7a, 7b), in das der Speicher (2), die Steuereinrichtung (3) und der RFID-Transponder (4) integriert sind,
- wobei das Gehäuse ein Gehäuseteil (7a) aus Kunststoff aufweist, wobei auf einer einem Benutzer zuzuwendenden Seite des Gehäuseteils (7a) aus Kunststoff ein Symbol (14) als Positionierhilfe für eine Schreib-/Leseantenne (9) des RFID-Schreib-/Lesegeräts (5) vorgesehen ist, und
- wobei dem Transponder (4) eine Transponderantenne (6) zugeordnet ist, wobei die Transponderantenne (6) unterhalb des Symbols (14) des Gehäuseteils (7a) aus Kunststoff angeordnet ist.

## Claims

1. A frequency or servo inverter (1, 1a) which is supplied in operation with an operating voltage (UN), the inverter comprising:
- a non-volatile memory (2) for storing operating parameter values and/or program code of the frequency or servo inverter (1),
- a control device (3) which is coupled to the memory (2) and controls an operation of the frequency or servo inverter (1) depending on the stored operating parameter values and/or the stored program code as long as the frequency or servo inverter (1) is supplied with the operating voltage,
- a passive radio-frequency identification (RFID) transponder (4) which is coupled to the memory (2) and, regardless of whether the frequency or servo inverter (1) is or is not supplied with the operating voltage (UN), is designed to store operating parameter values transferred from an RFID read/write device (5) and/or program code transferred from the RFID read/write device (5) in the memory (2), and/or to transfer operating parameter values stored in the memory (2) and/or program code stored in the memory (2) to the RFID read/write device (5), and
- a housing (7; 7a, 7b) into which the memory (2), the control device (3) and the RFID transponder (4) are integrated,
- wherein the housing comprises a plastic housing part (7a), wherein a symbol (14) is provided on a side of the plastic housing part (7a) to be facing a user as a positioning aid for a read/write antenna (9) of the RFID read/write device (5), and
- wherein a transponder antenna (6) is assigned to the transponder (4), wherein the transponder antenna (6) is disposed below the symbol (14) of the plastic housing part (7a).

## Revendications

1. Variateur de fréquence ou servovariateur (1, 1a) qui, en fonctionnement, est alimenté par une tension de service (UN), comprenant :
- une mémoire non volatile (2) destinée à la mise en mémoire de valeurs de paramètre de fonctionnement et/ou d'un code de programme du variateur de fréquence ou servovariateur (1),
- un dispositif de commande (3) qui est connecté à la mémoire (2) et qui commande un fonctionnement du variateur de fréquence ou servovariateur (1) en fonction des valeurs de paramètre de fonctionnement mises en mémoire et/ou du code de programme mis en mémoire tant que le variateur de fréquence ou servovariateur (1) est alimenté avec la tension de service,
- un transpondeur (4) d'identification passive par radiofréquence (RFID) qui est connecté à la mémoire (2) et qui est configuré pour, indépendamment du fait que le variateur de fréquence ou servovariateur (1) soit alimenté avec la tension de service (UN), enregistrer dans la mémoire (2) les valeurs de paramètre de fonctionnement transmises par un appareil de lecture/écriture RFID (5) et/ou par le code de programme transmis par l'appareil de lecture/écriture RFID (5) et/ou pour transmettre à l'appareil de lecture/écriture RFID (5) les valeurs de paramètre de fonctionnement enregistrées dans la mémoire (2) et/ou les codes de programme enregistrés dans la mémoire (2), et
- un boîtier (7 ; 7a, 7b) dans lequel sont intégrés la mémoire (2), le dispositif de commande (3) et le transpondeur RFID (4),
- le boîtier possédant une partie de boîtier (7a) en matière plastique, un symbole (14) servant d'aide au positionnement pour une antenne de lecture/écriture (9) de l'appareil de lecture/écriture RFID (5) se trouvant sur un côté de la partie de boîtier (7a) en matière plastique à diriger face à un utilisateur, et
- une antenne de transpondeur (6) étant associée au transpondeur (4), l'antenne de transpondeur (6) étant disposée au-dessous du symbole (14) de la partie de boîtier (7a) en matière plastique.
